# EUROPÄISCHE PATENTSCHRIFT

(11) **EP 3 156 666 B1**
(45) Veröffentlichungstag und Bekanntmachung des Hinweises auf die Patenterteilung: **10.11.2021**
(21) Anmeldenummer: 16184999.7
(22) Anmeldetag: 19.08.2016
(51) Int. Cl.: F16B 5/02, F16B 19/02

(54) **BEFESTIGUNGSSYSTEM FÜR EIN MASCHINENELEMENT**
FASTENING SYSTEM FOR A MACHINE ELEMENT
SYSTEME DE FIXATION D'UN ELEMENT DE MACHINE

(30) Priorität: 28.08.2015 DE 102015114401
(43) Veröffentlichungstag der Anmeldung: 19.04.2017
(73) Patentinhaber: WITTENSTEIN SE, 97999 Igersheim (DE)
(72) Erfinder: Schmieder, Markus, 77796 Mühlenbach (DE); Heckmann, Marco, 97944 Boxberg (DE); Endres, Jochen, 97258 Hemmersheim (DE); Herrmann, Markus, 97980 Bad Mergentheim (DE)
(74) Vertreter: Zimmermann & Partner Patentanwälte mbB

(56) Entgegenhaltungen:
- CN-U- 201 461 611
- CN-U- 203 114 822
- DE-A1- 2 601 388
- DE-B- 1 178 568
- DE-C1- 4 424 151
- JP-A- S60 172 717
- JP-A- S61 124 716
- None

## Beschreibung

### Gebiet der Erfindung

Die Erfindung betrifft ein Befestigungssystem für ein Maschinenelement nach dem Anspruch 1, sowie einen Exzenterbolzen nach Anspruch 10 und ein Verfahren zum Befestigen eines Maschinenelementes nach Anspruch 11.

### Stand der Technik

Bei der Montage von Maschinenelementen, bspw. Zahnstangen oder Linearführungen, ist ein wichtiger Punkt, dass diese während des Betriebes und über die gesamte Lebensdauer ortsfest bzw. lagesicher mit einem Maschinenbett verbunden sind. Die sichere Verbindung muss auch gewährleistet sein, wenn sehr hohe Kräfte auf das Maschinenelement wirken. Aus dem Stand der Technik sind Verfahren bekannt, bei welchen ein Maschinenelement zunächst an das Maschinenbett durch Schrauben montiert wird und zusätzlich durch Stifte mit dem Gegenstück fixiert wird. Hierzu muss das Maschinenelement während der Montage an mehreren Stellen gemeinsam mit dem Maschinenbett gebohrt und gerieben werden, damit die Zylinder-, Kegel-, Kerb- oder Spannstifte gefügt werden können. Da die Maschinenelemente häufig Bestandteile von großen Baugruppen, Maschinen oder Anlagen sind, können diese zum Bohren und Reiben nicht auf dafür vorgesehene, stationäre Maschinen gebracht werden. Das Bohren und Reiben muss daher während der Montage durch portable Maschinen erfolgen. Diese Arbeitsgänge sind sehr zeitaufwändig, unkomfortabel und verursachen Verunreinigungen durch Späne.

Aus der DE 26 01 388 A ist eine Passbolzenanordnung für nicht koaxiale Bohrungen bekannt wobei ein Passbolzen mit mindestens zwei gegenseitig drehbar beweglichen Exzentern oder mit mindestens einer mit nicht axialparalleler Rotationsfläche begrenzten Hülse versehen ist. Die JP S61 124716 A offenbart Exzenterbolzen zur Verbindung zweier Teile miteinander. Die DE 44 24 151 C1 offenbart eine Befestigungsvorrichtung für ein Beschlagteil.

Die DE 11 78 568 B zeigt einen Exzenterbolzen nach dem Stand der Technik.

### Offenbarung der Erfindung

Aufgabe der Erfindung ist es, aus dem Stand der Technik bekannte Befestigungssysteme für Maschinenelemente zu verbessern. Insbesondere sollten ein einfacher Aufbau oder eine unkomplizierte oder schnelle oder saubere Montage möglich sein. Weiterhin ist eine hohe Belastbarkeit wünschenswert.

Die Aufgabe wird mit einem Befestigungssystem für ein Maschinenelement nach dem Anspruch 1, sowie einem Exzenterbolzen nach Anspruch 10 und einem Verfahren zum Befestigen eines Maschinenelementes nach Anspruch 11 gelöst. Typische Weiterbildungen sind in den Unteransprüchen angegeben.

Typische Ausführungsformen umfassen einen insbesondere zumindest abschnittsweise zylinderförmigen Kopfabschnitt. Der Kopfabschnitt ist typischerweise konzentrisch zu dem Fügeabschnitt. Bei weiteren Ausführungsformen bildet der Fügeabschnitt zugleich bei gleichbleibendem Durchmesser einen Kopfabschnitt aus. Ausführungsformen können auch zumindest teilweise konische geformte Abschnitte aufweisen, beispielsweise zumindest einer des Zapfenabschnitts, des Fügeabschnitts, eines Zwischenabschnitts oder des Kopfabschnitts, erfindungsgemäß ist jedoch von dem Zapfenabschnitt zu dem Fügeabschnitt eine sich exzentrisch verbreiternde Stufe ausgebildet.

Bei typischen Ausführungsformen ist der Kopfabschnitt zumindest abschnittsweise zylinderförmig ausgeführt. Bei Ausführungsformen weist der Kopfabschnitt lediglich teilweise kreisrunde Abschnitte entlang der Umfangsrichtung auf. Dazwischen können Nuten oder Öffnungen vorgesehen sein. Bei weiteren Ausführungsformen weisen der Kopfabschnitt, der Zapfenabschnitt und/oder der Fügeabschnitt jeweils umlaufend durchgängige Zylinderflächen am Außenumfang auf.

Typische Ausführungsformen betreffen ein Befestigungssystem zur Befestigung eines Maschinenelementes in einem Maschinenbett mit einem Exzenterbolzen und einer Exzenterhülse. Der Exzenterbolzen ist typischerweise in mehrere Abschnitte untergliedert. Ein insbesondere kreisrunder Zapfenabschnitt dient zur Aufnahme des Exzenterbolzens im Maschinenbett. Der Durchmesser des Zapfenabschnitts entspricht dabei ungefähr dem Innendurchmesser einer Aufnahmeöffnung im Maschinenbett. Typischerweise weisen die Aufnahmeöffnung und der Zapfenabschnitt eine Übergangspassung auf. Typische Zapfenabschnitte weisen eine Toleranz von g6 bis m6, beispielsweise k6 auf. Typische Aufnahmeöffnungen weisen eine Toleranz zwischen G7 und K7 auf, beispielsweise H7. Typischerweise weist die Passung zwischen Zapfenabschnitt und Aufnahmeöffnung ein maximales Übermaß von +60, typischerweise +30 und/oder ein maximales Spiel von -40, typischerweise -20 auf. Die Werte sind dabei mit der Einheit µm versehen. Bei Ausführungsbeispielen weisen die Aufnahmeöffnung und der Zapfenabschnitt eine Presspassung auf.

Typischerweise unmittelbar an den Zapfenabschnitt des Exzenterbolzens schließt sich der exzentrisch zum Zapfen angeordnete Fügeabschnitt an. Bei beispielhaften Ausführungsformen schließt sich unmittelbar an den Zapfenabschnitt des Exzenterbolzens der exzentrisch zum Zapfen angeordnete Fügeabschnitt an. Bei Ausführungsformen ist zwischen dem Zapfenabschnitt und dem Fügeabschnitt und/oder zwischen dem Fügeabschnitt und dem Kopfabschnitt noch ein Zwischenabschnitt vorgesehen, beispielsweise mit einem geringeren Durchmesser als beide angrenzenden Abschnitte oder mit einem Durchmesser welcher zwischen den Durchmessern der angrenzenden Abschnitte liegt.

Die Mantelfläche des Fügeabschnitts dient typischerweise als Fügefläche, an welcher der Innenumfang der Exzenterhülse unmittelbar anliegt. Bei weiteren Ausführungsformen ist noch eine Zwischenhülse vorgesehen.

Der Kopfabschnitt des Exzenterbolzens ist typischerweise exzentrisch zum Zapfen sowie konzentrisch zum Fügeabschnitt angeordnet. Der Durchmesser des Kopfabschnitts ist bei erfindungsgemäßen Ausführungsformen gleich groß oder kleiner als der Durchmesser des Fügeabschnitts.

Typische Exzenterbolzen sind einstückig ausgeführt. Bei weiteren Ausführungsformen ist der Exzenterbolzen aus mehreren Teilen aufgebaut, beispielsweise zusammengeschraubt.

Erfindungsgemäß umfasst der Kopfabschnitt ein Drehmomentübertragungsmittel, beispielsweise ein innenliegendes Drehmomentübertragungsmittel. Typische Drehmomentübertragungsmittel sind Innensechskante, Schlitze, Kreuzschlitze oder andere Strukturen, weiche ein Ansetzen eines Werkzeuges zum Verdrehen des Exzenterbolzens um seine Längsachse ermöglichen. Bei weiteren Ausführungsformen ist das Drehmomentübertragungsmittel am Außenumfang des Kopfabschnitts oder axial benachbart zum Kopfabschnitt angeordnet, beispielsweise ein Vierkant oder ein Sechskant, deren maximale Durchmesser kleiner sind als der Durchmesser des Kopfabschnitts.

Typischerweise ist das Drehmomentübertragungsmittel konzentrisch zu dem Zapfenabschnitt angeordnet. Dies ermöglicht eine einfache Drehung des Exzenterbolzens in einer Aufnahmeöffnung. Bei weiteren Ausführungsformen ist das Drehmomentübertragungsmittel nicht konzentrisch zu dem Zapfenabschnitt, beispielweise konzentrisch zu dem Kopfabschnitt oder nicht konzentrisch zu beiden genannten Abschnitten angeordnet.

Typische Ausführungsformen der Erfindung umfassen eine Exzenterhülse, welche sich durch eine zumindest abschnittsweise zylindrische innere Bohrung mit einem Innendurchmesser und eine exzentrisch dazu angeordnete zumindest abschnittsweise zylinderförmige Außenfläche auszeichnet. Die Exzentrizität des Fügeabschnitts relativ zu dem Zapfenabschnitt und die Exzentrizität der Exzenterhülse sind typischerweise identisch. Dies ermöglicht eine einfache Justage. Bei weiteren Ausführungsformen sind die Exzentrizitäten unterschiedlich.

Ausführungsformen von Maschinenelementen betreffen insbesondere Zahnstangen oder Linearführungen. Weitere Beispiele sind Flansche, welche an anderen Flanschen als Widerlager befestigt werden können. "Widerlager" kann dabei, ist dabei aber typischerweise nicht zwingend als ortsfest zu verstehen. Beispielweise können auch Abtriebswellen oder Abtriebsflansche von Motoren oder Getrieben "Wiederlager" bilden, an welche Maschinenelemente mit typischen Befestigungssystemen befestigt werden können.

Zahnstangen werden in der Regel modular gefertigt und in Reihe montiert. Typische Zahnstangen umfassen mehrere Befestigungsstellen, wie beispielsweise Bohrungen ohne oder mit Stufe für Exzenterbolzen und/oder Befestigungsöffnungen mit Stufe zur Aufnahme von Schrauben. Typische Bohrungen zur Aufnahme der Exzenterbolzen im Maschinenelement sind gestuft. Gestufte Bohrungen setzen sich typischerweise aus einem Fügeteil im unteren Bereich zur Aufnahmebohrung im Maschinenbett hin und einem anschließenden, gegenüber dem Fügebereich größeren Teil zusammen. Beide Abschnitte sind typischerweise ungefähr gleich lang können bei Ausführungsformen jedoch auch unterschiedliche Längen aufweisen.

Typischerweise ist die Exzenterhülse zum Aufschieben, insbesondere Aufpressen, Einschlagen oder Aufdrücken, auf den Fügeabschnitt geeignet. Dabei ist typischerweise mit "Aufschieben" auch ein Vorgang umfasst, welcher Schlagen oder Drücken oder einen andere Kraftaufwand umfasst. Die Exzenterhülse ist typischerweise über Kopfabschnitt auf den Fügeabschnitt aufschiebbar. Dies ermöglicht eine Montage bei in der Aufnahmeöffnung des Widerlagers aufgenommenem Exzenterbolzen.

Typischerweise umfasst das Maschinenelement Bohrungen zur Aufnahme der Exzenterbolzen und der auf den Exzenterbolzen angeordneten Exzenterhülsen. Bei typischen Ausführungsformen weist der Innendurchmesser der Bohrung eine Übergangspassung und/oder eine Presspassung zu dem Außenumfang der Exzenterhülse auf. Typische Exzenterhülsen weisen am Außenumfang eine Toleranz von g6 bis m6, beispielsweise k6 auf. Typische Bohrungen weisen eine Toleranz zwischen G7 und K7 auf, beispielsweise H7 auf. Typischerweise weist die Passung zwischen Exzenterhülse und Bohrung ein maximales Übermaß von +60, typischerweise +30 und/oder ein maximales Spiel von -40, typischerweise -20 auf. Die Werte sind dabei mit der Einheit µm versehen.

Bei typischen Ausführungsformen ist der Innendurchmesser der Exzenterhülse mit einer Übergangspassung und/oder einer Presspassung zu dem Fügeabschnitt ausgebildet. Typische Fügeabschnitte weisen eine Toleranz von g6 bis m6, beispielsweise j6, auf. Typische Exzenterhülsen weisen am Innendurchmesser eine Toleranz zwischen G7 und K7 auf, beispielsweise H7 auf. Typischerweise weist die Passung zwischen Fügeabschnitt und Exzenterhülse ein maximales Übermaß von +60, typischerweise +30 und/oder ein maximales Spiel von -40, typischerweise -20 auf. Die Werte sind dabei mit der Einheit µm versehen. Grundsätzlich beziehen sich Angaben auf ein "maximales" Spiel auf den Absolutwert der dazugehörigen Angabe, bspw. umfasst eine Angabe "maximales Spiel" von -40 auch den Wert -38.

Typische Durchmesser der Exzenterhülse, des Fügeabschnitts, des Zapfenabschnitts, der Aufnahmebohrung oder der Bohrung liegen zwischen 4mm und 50mm.

Das Widerlager weist typischerweise kreisrunde Aufnahmeöffnungen auf, welche zur Aufnahme des Zapfenabschnitts des Exzenterbolzens dienen. Die Exzenterhülse wird zwischen der Außenfläche des Fügeabschnitts des Exzenterbolzens und einer kreisrunden Bohrung in dem zu befestigenden Maschinenelement gefügt. Die Bohrung im Maschinenelement kann auch zwei oder mehr Abschnitte unterschiedlichen Durchmessers umfassen, wobei die Durchmesserangaben in Relation zu dem Fügeabschnitt sich auf den entsprechenden Abschnitt beziehen, welcher im montierten Zustand auf Höhe des Fügeabschnitts liegt.

Bei typischen Verfahren wird das Maschinenelement grob zu dem Widerlager ausgerichtet und zunächst beispielsweise mit Spannelementen, wie beispielsweise Schrauben oder Gewindebolzen befestigt. Typische Widerlager umfassen Gewindeöffnungen zur Aufnahme von Spannelementen, welche eine Montage, Fixierung und/oder Vormontage des Maschinenelementes ermöglichen. Die Aufnahmeöffnungen im Widerlager sind typischerweise nicht koaxial zu den Bohrungen im Maschinenelement, sondern versetzt angeordnet. Bei weiteren Ausführungsformen sind die Aufnahmeöffnungen und die Bohrungen im montierten Zustand koaxial.

Die Exzenterhülse ist dafür vorgesehen, den Exzenterbolzen zu umschließen oder den Raum zwischen dem Fügeabschnitt des Exzenterbolzens und dem entsprechenden Abschnitt der Bohrung im Maschinenelement auszufüllen. Hierdurch entsteht typischerweise eine formschlüssige Verbindung zwischen Maschinenelement und Gegenstück. Um die Exzenterhülse zwischen Exzenterbolzen und Bohrung im Maschinenelement einführen zu können, ist eine Ausrichtung des Exzenterbolzens erforderlich. Hierzu kann ein zu dem Drehmomentübertragungsmittel im Kopfabschnitt des Exzenterbolzens passendes Einstellwerkzeug genutzt werden, womit der Exzenterbolzen in die passende Winkelsteilung verdreht werden kann.

Bei typischen Ausführungsformen umfasst der Exzenterbolzen ein axial verlaufendes Innengewinde. Allgemeiner umfassen Exzenterbolzen von typischen Ausführungsformen ein Eingriffsmittel, welches es erlaubt, den Exzenterbolzen in seiner axialen Richtung beispielsweise aus dem Widerlager wieder zu entfernen. Dies kann alternativ zu einem Innengewinde beispielsweise auch eine Nut zum Eingriff eines Zapfens sein. Das Innengewinde kann entlang der Längsachse des Exzenterbolzens ausgerichtet sein, das heißt axial verlaufend. Bei weiteren Ausführungsformen ist das Innengewinde schräg zur Längsachse angeordnet.

Typischerweise ist der Durchmesser des Innengewindes bei vorhandenem Drehmomentübertragungsmittel kleiner als der Durchmesser des Drehmomentübertragungsmittels. Das Innengewinde kann im Bereich des Kopfabschnitts, des Fügeabschnitts oder auch durchgehend durch den Exzenterbolzen ausgeführt sein. Bei typischen Ausführungsformen schließt sich das Innengewinde an das Drehmomentübertagungsmittel an. Bei weiteren Ausführungsformen ist kein Drehmomentübertragungsmittel vorhanden. In einem solchen Fall kann das Innengewinde zurück versetzt sein oder unmittelbar beim Beginn des Kopfabschnitts beginnen.

Bei typischen Ausführungsformen ist die Exzenterhülse zumindest an einem der beiden axialen Enden jeweils innen und/oder außen angefast. Dabei können sämtliche Begrenzungsflächen innen und außen an beiden Enden angefast sein, oder auch einzelne oder mehrere davon. Bei weiteren Ausführungsformen weist beispielsweise zumindest eine der Abschnitte eine Fase auf, beispielsweise der Kopfabschnitt oder der Zapfenabschnitt. Auch bei sich verändernden Durchmessern oder bei exzentrisch zueinander angeordneten Abschnitten können an den Übergängen Fasen angeordnet sein. Angefaste Abschnitte, Begrenzungsflächen oder -enden können ein Einführen erleichtern. Insbesondere wird bei Ausführungsformen die Innenfläche der Exzenterhülse an beiden Enden angefast. Alternativ oder zusätzlich ist typischerweise das zum Kopfabschnitt weisende Ende des Fügeabschnitts angefast. Auf diese Weise kann ein Einpressen, Einschlagen oder allgemein ein Aufschieben der Exzenterhülse auf den Fügeabschnitt erleichtert werden.

Bei typischen Ausführungsformen umfasst der Exzenterbolzen oder das Widerlager eine Entlüftungsöffnung. Auf diese Weise wird vermieden, dass durch Kompression von Luft ein Widerstand für das Einschieben des Exzenterbolzens im Widerlager entsteht. Bei Ausführungsformen bietet die Erfindung zum Beispiel den Vorteil, dass die Montage erleichtert wird und mit deutlichen Zeiteinsparungen von statten geht.

### Kurze Beschreibung der Zeichnungen

Weitere Vorteile und Merkmale bevorzugter Ausführungsformen der Erfindung werden nachfolgend anhand der beiliegenden Zeichnungen erläutert, wobei die Figuren zeigen:
- Figur 1: zeigt eine typische Ausführungsform eines erfindungsgemäßen Exzenterbolzens in einer schematischen perspektivischen Ansicht;
- Figur 2: zeigt in einer schematischen perspektivischen Ansicht eine Exzenterhülse gemäß typischen Ausführungsformen;
- Figur 3: zeigt ein Widerlager zusammen mit montierten Maschinenelementen in einer perspektivischen schematischen, teilweise ausgeschnittenen Ansicht;
- Figur 4: zeigt das Maschinenelement der Figur 3 in einer Ausschnitts-Ansicht in schematischer Draufsicht;
- Figur 5: zeigt einen Schnitt durch das Maschinenelement und das Widerlager der Figuren 3 und 4 in einer schematischen Schnittansicht;
- Figur 6: zeigt in einer schematischen perspektivischen Ansicht eine weitere typische Ausführungsform;
- Figur 7: zeigt in einer schematischen ausgeschnittenen Ansicht einen Querschnitt durch einen Teil der Ausführungsform der Figur 6.

### Beschreibung bevorzugter Ausführungsbeispiele

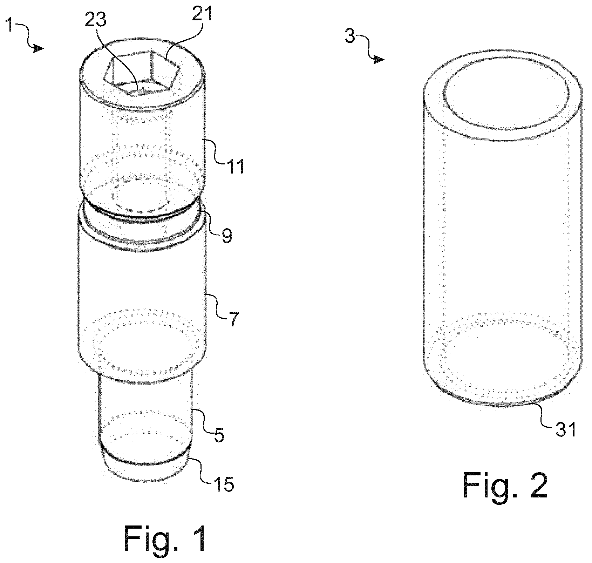

Nachfolgend werden typische Ausführungsformen anhand der Figuren beschrieben, wobei die Erfindung nicht auf die Ausführungsbeispiele beschränkt ist, vielmehr wird der Umfang der Erfindung durch die Ansprüche bestimmt. In den Fig. 1-7 sind typische Ausführungsformen oder Teile von typischen Ausführungsformen gezeigt.

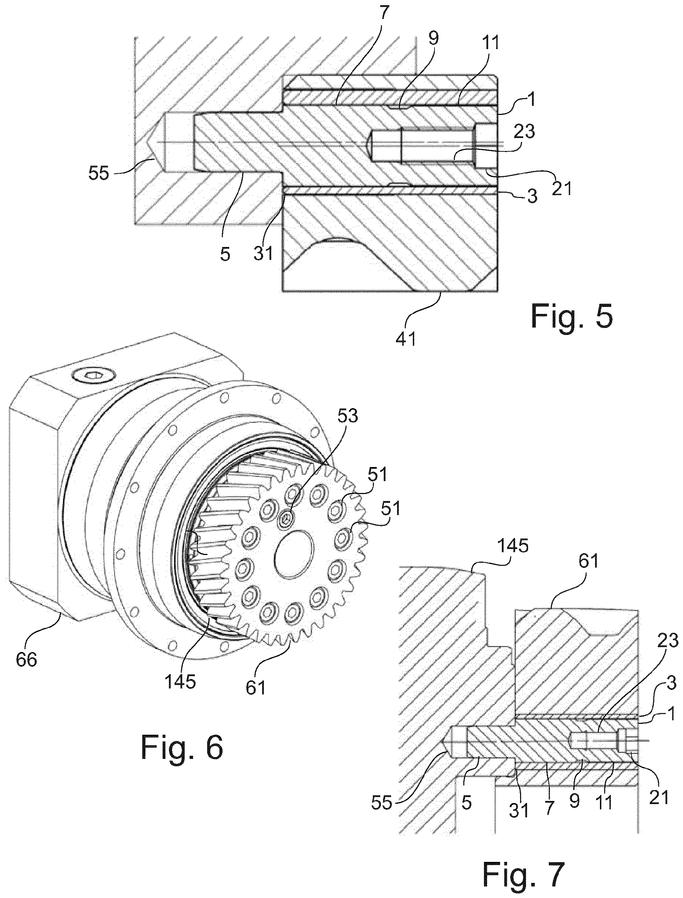

Die Figuren 1 bis 5 werden nachfolgend zusammenhängend beschrieben, wobei nicht zu jeder Figur im Einzelnen jedes Merkmal oder jedes Bezugszeichen erläutert wird. Ebenfalls werden die Figuren 6 und 7 zusammen beschrieben, wobei Merkmale und Elemente, welche bereits im Zusammenhang mit den Figuren 1 bis 5 erläutert wurden, unter Umständen nicht vollständig im Zusammenhang mit den Figuren 6 und 7 nochmals erläutert werden.

In der Figur 1 ist ein typischer Exzenterbolzen 1 von Ausführungsformern gezeigt, wohingegen die Figur 2 eine typische Ausführungsform einer Exzenterhülse 3 zeigt. Die Darstellungen der Figuren 1 und 2 sowie auch die Darstellungen der übrigen Figuren weisen teilweise unterschiedliche Maßstäbe auf, wobei jedoch die Maßstäbe der Figuren 1 und 2 zumindest grob übereinstimmen.

Der Exzenterbolzen 1 weist verschiedene Abschnitte auf, nämlich einen Zapfenabschnitt 5, einen sich unmittelbar daran anschließenden Fügeabschnitt 7, einen sich daran unmittelbar anschließenden Zwischenabschnitt 9 sowie einen sich daran unmittelbar anschließenden Kopfabschnitt 11.

Der Zapfenabschnitt 5 weist einen unteren angefasten Rand 15 auf, welcher ein Einführen des Exzenterbolzens 1 in ein Widerlager erleichtert. Weiterhin können auch die Kanten zwischen den weiteren Abschnitten, beispielsweise jeweils zwischen dem Fügeabschnitt 7 sowie dem Kopfabschnitt 11 einerseits und dem im Durchmesser kleineren Zwischenabschnitt 9 angefast sein.

Sämtliche Abschnitte 5, 7, 9 und 11 sind zumindest abschnittsweise zylinderförmig, mit Ausnahme der konisch angefasten Endstücke, wie beispielsweise der angefaste Rand 15 des Zapfenabschnittes 5. Wie bei typischen Ausführungsformen sind die Abschnitte Fügeabschnitt 7 und Zwischenabschnitt 9 und Kopfabschnitt 11 konzentrisch zueinander und exzentrisch bezüglich des Zapfenabschnitts 5.

Der Durchmesser des Kopfabschnitts ist geringfügig kleiner als der Durchmesser des Fügeabschnitts 7. Bei typischen Ausführungsformen ist der Durchmesser des Kopfabschnitts um mindestens 0,01mm, typischerweise mindestens 0,05mm oder mindestens 0,1mm und/oder maximal 3mm, maximal 1mm oder maximal 0,5mm kleiner als der Fügeabschnitt. Typischerweise beträgt bei Ausführungsformen die Reduzierung des Durchmessers des Kopfabschnitts relativ zu dem Durchmesser des Fügeabschnitts maximal 5% und/oder minimal 0,5%.

Der Zwischenabschnitt 9 ist zumindest 1%, typischerweise etwa 2 bis 20% im Durchmesser kleiner als der Fügeabschnitt 7. Die Ausführungsform der Figur 1 weist an dem oberen Ende des Fügeabschnitts 7, also dem Ende, welches dem Zwischenabschnitt 9 zugewandt ist, eine Fase auf.

Ausführungsformen der Erfindung weisen an dem Ende des Fügeabschnitts, welches dem Zwischenabschnitt oder dem Kopfabschnitt zugewandt ist, eine Fase auf. Diese Fase kann dazu dienen, dass die Exzenterhülse beim Aufschieben nicht an einem scharfkantigen Übergang zwischen Fügeabschnitt und Kopfabschnitt blockiert, sondern ungehindert auf den Fügebereich aufgeschoben werden kann. Weitere Ausführungsformen weisen zur einfacheren Herstellung keinen Zwischenabschnitt oder keine Fase an dem beschriebenen Ende des Fügeabschnitts auf. Ein Zwischenabschnitt kann bei Ausführungsformen eine Herstellung der Fase erleichtern. Bei der in den Figuren dargestellten Ausführungsform sind weitere Fasen vorgesehen, nämlich an den Enden des Kopfabschnitts, welche ebenso optional einzeln oder gemeinsam bei anderen Ausführungsformen vorgesehen werden können.

Der Kopfabschnitt 11 des Exzenterbolzens 1 der Figur 1 weist ein Drehmomentübertragungsmittel 21 auf, welches als Innensechskant ausgeführt ist. Mittels des Drehmomentübertragungsmittels 21 kann der Exzenterbolzen 1 um seine Achse gedreht werden.

Unmittelbar anschließend an das Drehmomentübertragungsmittel 21 ist in dem Exzenterbolzen 1 in axialer Richtung ein Innengewinde 23 vorgesehen, welches in der Figur 1 nur teilweise dargestellt ist, jedoch in der Figur 5 im Schnitt in vollständiger Länge erkennbar ist.

Die Exzenterhülse 3 der Figur 2 weist an ihrem unteren Ende eine angefaste Kante 31 auf, welche das Einführen in ein Maschinenelement beziehungsweise in den Zwischenraum zwischen dem Exzenterbolzen 1 und einem Maschinenelement erleichtert. Im Übrigen besteht die Exzenterhülse 3 der Ausführungsform, welche in den Figuren 1 bis 5 gezeigt ist, lediglich aus einem Zylinder mit einem durchgehend konstanten Durchmesser und einer innenliegenden durchgehenden Bohrung.

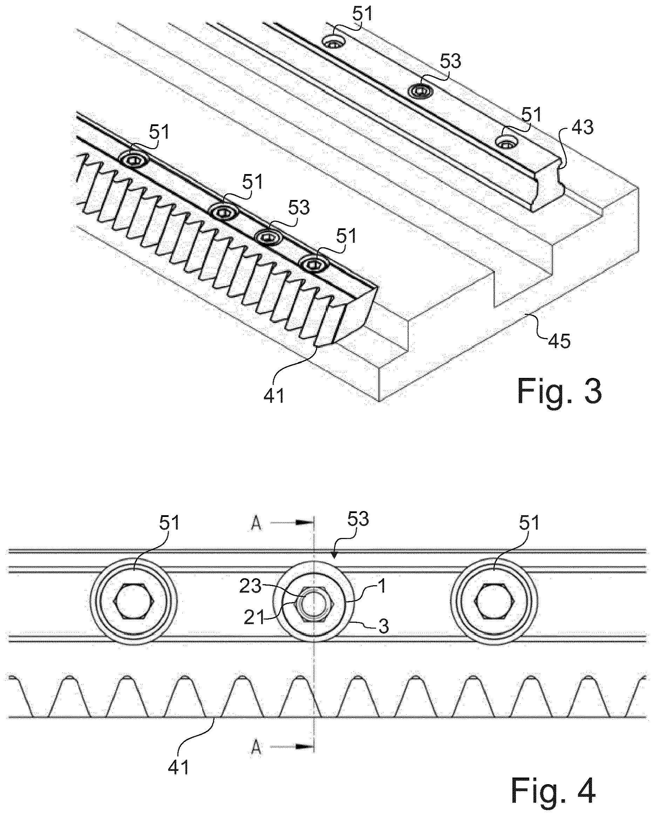

In der Figur 3 sind ein erstes Maschinenelement 41, welches als Zahnstange ausgeführt ist, sowie ein zweites längliches Maschinenelement 43, welches als Linearführung ausgeführt ist, gezeigt. Die Maschinenelemente 41 und 43 sind jeweils mit Schraubverbindungen 51 sowie Ausführungsformen erfindungsgemäßer Exzenterbolzen mit Ausführungsformen erfindungsgemäßer Exzenterhülsen befestigt. Mit Hilfe dieser Befestigungen 53 sind die Maschinenelemente 41 und 43 fest mit dem Widerlager 45 verbunden, welches bei der Ausführungsform der Figur 3 als Maschinenbett ausgeführt ist. Die Schraubverbindungen 51 können Schraubverbindungen sein, wie sie aus dem Stand der Technik bekannt sind. Mittels der Schraubverbindungen 51 können sich beispielsweise die Maschinenelemente 41 und 43 im Widerlager 45 vormontieren lassen.

In der Figur 4 ist das Maschinenelement 41 der Figur 3 in einer Draufsicht gezeigt, wobei die Schraubverbindungen 51 sowie eine Befestigung 53 mit einem Exzenterbolzen 1 sowie mit einer Exzenterhülse 3 gezeigt ist.

Die Figur 5 zeigt einen Schnitt durch die Befestigung 53 mit dem Exzenterbolzen 1 und der Exzenterhülse 3. In dem Schnitt ist deutlich die Exzentrizität sowohl des Exzenterbolzens 1 als auch der Exzenterhülse 3 zu erkennen. Weiterhin ist das Innengewinde 23 zu erkennen, welches sich im Wesentlichen über den Kopfabschnitt 11 und den Zwischenabschnitt 9 erstreckt. Als Sacklochbohrung ist die Öffnung für das Innengewinde 23 noch teilweise bis hinein in den Fügeabschnitt 7 fortgesetzt. Bei weiteren Ausführungsformen existiert eine durchgehende Bohrung, in welcher beispielsweise ein Innengewinde oder ein Drehmomentübertragungsmittel angeordnet sein können.

Der Zapfenabschnitt 5 steckt in einer Aufnahmeöffnung 55, welche hier beispielhaft als Sacklochbohrung in dem Maschinenelement 41 ausgeführt ist. Daneben verfügt das Maschinenelement 41 noch über Gewindeöffnungen für die Schrauben der Schraubverbindungen 51, welche Schrauben als Spannelemente zum Montieren oder Vormontieren des Maschinenelements 41 verwenden.

Bei der Verwendung von typischen Ausführungsformen, wie sie in den Figuren 1 bis 5 beispielsweise dargestellt sind, wird das Maschinenelement 41 oder 43 zunächst grob zu den Widerlager 45 ausgerichtet und mit Spannelementen wie beispielsweise Schrauben (Schraubenbefestigungen 51) befestigt. Die Aufnahmeöffnungen 55 im Widerlager 45 sind dann bei Ausführungsformen regelmäßig nicht koaxial sondern versetzt zu den Bohrungen in den Maschinenelementen 41 oder 43 ausgerichtet. Bei weiteren Ausführungsformen sind die Bohrungen in den Maschinenelementen 41 und 43 koaxial zu den Aufnahmeöffnungen 55 in den Maschinenelementen 41 oder 43 angeordnet. Bei nicht koaxialer Anordnung können Exzentrizitäten der Bohrung zu der Aufnahmeöffnung 55 von maximal der Summe der Exzentrizitäten des Exzenterbolzens 1 und der Exzenterhülse 3 überbrückt werden.

Der Exzenterbolzen 1 wird mit dem Zapfenabschnitt 5 in die Aufnahmeöffnung 55 des Widerlagers 41 eingesetzt. Die Exzenterhülse 3 wird nachfolgend über den Kopfabschnitt 11 des Exzenterbolzens 1 geschoben, wobei unter Umständen der Exzenterbolzen 1 mittels des Drehmomentübertragungsmittels 21 derart ausgerichtet wird, dass ein Einführen der Exzenterhülse 3 mit dem angefasten Kante 31 erleichtert wird. Hierzu ist unter Umständen ein Verdrehen der Exzenterhülse 3 um ihre Längsachse notwendig, bis ein Einführen oder Aufschieben auf den Kopfabschnitt 11 möglich ist. Nach etwaiger nochmaliger Feinjustage des Exzenterbolzens 1 relativ zu der Exzenterhülse 3 und beider zusammen relativ zu den Maschinenelement 41 wird die Exzenterhülse 3 weiter eingeschoben, sodass sie über den Fügeabschnitt 7 gelangt. Hierzu ist unter Umständen ein Pressen, Schlagen oder ähnliche Gewaltanwendung notwendig, um ein Einführen zu ermöglichen, da die entsprechenden Passungen typischerweise Übergangspassungen sind, nämlich zwischen dem Maschinenelement 41 und der Außenseite der Exzenterhülse 3 sowie zwischen der Innenseite der Exzenterhülse 3 und der Außenseite des Fügeabschnitts 7. Die angefaste Kante 31 erleichtert das Aufschieben oder Einschlagen oder Einpressen.

Bei vollständig eingeschobener Exzenterhülse 3, deren Länge typischerweise der Breite oder der Dicke des Maschinenelementes 41 oder der Gesamtlänge des Fügeabschnitts, des Zwischenabschnitts, falls vorhanden, und des Kopfabschnitts entspricht, ist die Exzenterhülse 3 vollständig zwischen dem Exzenterbolzen 1 und dem Maschinenelement 41 aufgenommen.

Weitere Ausführungsformen umfassen unterschiedliche Längen für die Exzenterhülse in Bezug auf die Dicke oder die Breite des Maschinenelements oder unterschiedlicher Längen in Bezug auf die Gesamtlänge des Fügeabschnitts, des Kopfabschnitts plus ggf. des Zwischenabschnitts.

Ausführungsformen der Erfindung machen ein nachträgliches Bohren bei vormontierter Zahnstange oder bei vormontierten Widerlager überflüssig, da Ungenauigkeit der Aufnahmeöffnung relativ zu der Bohrung des Maschinenelementes durch die Exzentrizitäten der Exzenterhülse sowie des Exzenterbolzens ausgeglichen werden können. Die Erfindung macht sich dabei zu Nutze, dass mit zwei Exzentrizitäten, welche durch ein Übereinander schieben der Hülse und des Bolzens beliebig addiert werden können, Ungenauigkeiten bezüglich der Lage der Aufnahmeöffnungen relativ zu der Bohrung ausgeglichen werden können.

In den Figuren 6 und 7 ist ein weiteres Ausführungsbeispiel gezeigt, wobei ein Abtriebsritzel als Maschinenelement 61 auf einem Abtriebsflansch als Widerlager 145 montiert wird. Wiederum sind Schraubverbindungen 51, welche im Wesentlichen den Schraubverbindungen 51 des Ausführungsbeispiels der Figuren 1 bis 5 entsprechen, sowie Befestigungen 53 mittels Exzenterbolzen 1 und Exzenterhülse 3 vorgesehen.

Bei dem Ausführungsbeispiel der Figuren 6 und 7 ist lediglich eine Befestigung 53, welche Exzenterbolzen 1 und Exzenterhülse 3 verwendet, vorgesehen. Bei weiteren Ausführungsbeispielen können jedoch auch mehrere solcher Befestigungen 53 vorgesehen werden. Das Maschinenelement 61 als Abtriebsritzel ist Bestandteil eines Getriebes 66, welches ansonsten Getrieben aus dem Stand der Technik entsprechen kann.

## Patentansprüche

1. Befestigungssystem für ein Maschinenelement (41, 43, 61), insbesondere für ein längliches Maschinenelement (41, 43), insbesondere für eine Zahnstange oder eine Linearführung, zur Befestigung in einem Widerlager (45, 145), insbesondere einem Maschinenbett oder einem Flansch, mit:
- einem Exzenterbolzen (1), welcher einen Zapfenabschnitt (5) zur Aufnahme in einer Aufnahmeöffnung (55) eines Widerlagers (45, 145) und einen Fügeabschnitt (7) umfasst, und
- einer Exzenterhülse (3) zum Aufschieben auf den Fügeabschnitt (7),
- wobei der Exzenterbolzen (1) einen Kopfabschnitt (11) umfasst,
- wobei der Kopfabschnitt (11) ein Drehmomentübertragungsmittel (21) aufweist, und
- wobei der Durchmesser des Kopfabschnitts (11) des Exzenterbolzens (1) gleich groß oder geringer ist als der Durchmesser des Fügeabschnitts (7),
**dadurch gekennzeichnet, dass** der Fügeabschnitt (7) exzentrisch zu dem Zapfenabschnitt (5) angeordnet ist, so dass von dem Zapfenabschnitt (5) zu dem Fügeabschnitt (7) eine sich exzentrisch verbreiternde Stufe ausgebildet ist.

2. Befestigungssystem nach einem der vorhergehenden Ansprüche, wobei der Kopfabschnitt (11) zumindest abschnittsweise zylinderförmig ist und/oder wobei der Fügeabschnitt (7) zumindest abschnittsweise zylinderförmig ist.

3. Befestigungssystem nach einem der vorhergehenden Ansprüche, wobei der Fügeabschnitt (7) konzentrisch zu dem Kopfabschnitt (11) angeordnet ist.

4. Befestigungssystem nach einem der vorhergehenden Ansprüche, wobei der Exzenterbolzen (1) ein Innengewinde (23) umfasst

5. Befestigungssystem nach einem der vorhergehenden Ansprüche, wobei die Exzenterhülse (3) zumindest an einem der beiden axialen Enden jeweils innen und/oder außen angefast ist.

6. Befestigungssystem nach einem der vorhergehenden Ansprüche mit einem Widerlager (45, 145), in welchem eine Aufnahmeöffnung (55) zur Aufnahme des Zapfenabschnitts (5) vorgesehen ist.

7. Befestigungssystem nach Anspruch 6, wobei die Aufnahmeöffnung (55) und der Zapfenabschnitt (5) eine Übergangspassung aufweisen.

8. Befestigungssystem nach einem der vorhergehenden Ansprüche, wobei der Exzenterbolzen (1) und/oder das Widerlager (45, 145) eine Entlüftungsöffnung umfassen.

9. Befestigungssystem nach einem der vorhergehenden Ansprüche, wobei das Widerlager (45, 145) Gewindeöffnungen umfasst zur Aufnahme von Spannelementen zur Montage des Maschinenelementes (41, 43, 61).

10. Exzenterbolzen (1) für ein Befestigungssystem nach einem der vorhergehenden Ansprüche, welcher einen zumindest abschnittsweise zylinderförmigen Zapfenabschnitt (5) zur Aufnahme in einer Aufnahmeöffnung (55) eines Widerlagers (45, 145) und einen zumindest abschnittsweise zylinderförmigen Fügeabschnitt (7) umfasst,
**gekennzeichnet durch** einen zumindest abschnittsweise zylinderförmigen Kopfabschnitt (11), wobei der Fügeabschnitt (7) und der Kopfabschnitt (11) konzentrisch sind sowie exzentrisch zu dem Zapfenabschnitt (5) angeordnet sind, so dass von dem Zapfenabschnitt (5) zu dem Fügeabschnitt (7) eine sich exzentrisch verbreiternde Stufe ausgebildet ist, wobei der Kopfabschnitt (11) ein Drehmomentübertragungsmittel (21) aufweist, und wobei der Durchmesser des Kopfabschnitts (11) gleich groß oder geringer ist als der Durchmesser des Fügeabschnitts (7).

11. Verfahren zum Befestigen eines Maschinenelementes (41, 43, 61), insbesondere für ein längliches Maschinenelement (41, 43), insbesondere für eine Zahnstange oder eine Linearführung, auf einem Widerlager (45, 145) mit einem Befestigungssystem nach einem der Ansprüche 1 bis 9, mit:
Fixieren des Maschinenelementes (41, 43, 61) auf dem Widerlager (45, 145),
Einstecken des Exzenterbolzens (1) in die Aufnahmeöffnung (55) des Widerlagers (45, 145),
Ausrichten des Exzenterbolzens (1) durch Drehung in der Aufnahmeöffnung (55), um ein Aufschieben der Exzenterhülse (3) auf den Exzenterbolzen (1) zu ermöglichen,
Ausrichten der Exzenterhülse (3), und
Aufschieben der Exzenterhülse (3) auf den Fügeabschnitt (7).

## Claims

1. Fastening system for a machine element (41, 43, 61), in particular for an elongate machine element (41, 43), in particular for a toothed rack or a linear bearing, for fastening in an abutment (45, 145), in particular a machine bed or a flange, comprising:
- an eccentric bolt (1) which comprises a pin portion (5) for being received in a receiving opening (55) in an abutment (45, 145), and comprises a joining portion (7), and
- an eccentric sleeve (3) for being pushed onto the joining portion (7),
- the eccentric bolt (1) comprising a head portion (11),
- the head portion (11) having a torque transmission means (21), and
- the diameter of the head portion (11) of the eccentric bolt (1) being less than or equal to the diameter of the joining portion (7),
**characterised in that** the joining portion (7) is arranged eccentrically with respect to the pin portion (5) such that an eccentrically widening step is formed from the pin portion (5) to the joining portion (7).

2. Fastening system according to the preceding claim, wherein the head portion (11) is cylindrical at least in portions and/or wherein the joining portion (7) is cylindrical at least in portions.

3. Fastening system according to either of the preceding claims, wherein the joining portion (7) is arranged concentrically with respect to the head portion (11).

4. Fastening system according to any of the preceding claims, wherein the eccentric bolt (1) comprises an internal thread (23).

5. Fastening system according to any of the preceding claims, wherein the eccentric sleeve (3) is bevelled on the inside and/or outside at least at one of the two axial ends.

6. Fastening system according to any of the preceding claims, comprising an abutment (45, 145) in which a receiving opening (55) for receiving the pin portion (5) is provided.

7. Fastening system according to claim 6, wherein the receiving opening (55) and the pin portion (5) have a transition fit.

8. Fastening system according to any of the preceding claims, wherein the eccentric bolt (1) and/or the abutment (45, 145) comprise a ventilation opening.

9. Fastening system according to any of the preceding claims, wherein the abutment (45, 145) comprises threaded openings for receiving clamping elements for mounting the machine element (41, 43, 61).

10. Eccentric bolt (1) for a fastening system according to any of the preceding claims, which eccentric bolt comprises a pin portion (5) which is cylindrical at least in portions for being received in a receiving opening (55) in an abutment (45, 145), and a joining portion (7) which is cylindrical at least in portions,
**characterised by** a head portion (11) which is cylindrical at least in portions, the joining portion (7) and the head portion (11) being concentric and being arranged eccentrically with respect to the pin portion (5) such that an eccentrically widening step is formed from the pin portion (5) to the joining portion (7), the head portion (11) having a torque transmission means (21), and the diameter of the head portion (11) being less than or equal to the diameter of the joining portion (7).

11. Method for fastening a machine element (41, 43, 61), in particular for an elongate machine element (41, 43), in particular for a toothed rack or a linear bearing, on an abutment (45, 145) by means of a fastening system according to any of claims 1 to 9, comprising:
fixing the machine element (41, 43, 61) on the abutment (45, 145),
inserting the eccentric bolt (1) into the receiving opening (55) in the abutment (45, 145),
orienting the eccentric bolt (1) by rotating it in the receiving opening (55), in order to allow the eccentric sleeve (3) to be pushed onto the eccentric bolt (1),
orienting the eccentric sleeve (3), and
pushing the eccentric sleeve (3) onto the joining portion (7).

## Revendications

1. Système de fixation pour un élément de machine (41, 43, 61), en particulier pour un élément de machine (41, 43) allongé, en particulier pour une crémaillère ou un guidage linéaire, destiné à la fixation dans une butée (45, 145), en particulier dans un banc de machine ou une bride, comportant :
- un boulon d'excentrique (1), lequel comprend une section pivot (5) destinée à recevoir une butée (45, 145) dans une ouverture de réception (55) et une section d'assemblage (7), et
- un manchon d'excentrique (3) destiné au coulissement sur la section d'assemblage (7),
- dans lequel le boulon d'excentrique (1) comprend une section tête (11),
- dans lequel la section tête (11) comporte un moyen de transmission de couple (21) et
- dans lequel le diamètre de la section tête (11) du boulon d'excentrique (1) est égal ou inférieur au diamètre de la section d'assemblage (7),
**caractérisé en ce que** la section d'assemblage (7) est disposée de manière excentrée par rapport à la section pivot (5) de telle sorte que, entre la section pivot (5) et la section d'assemblage (7), un étage s'étendant de manière excentrée est formé.

2. Système de fixation selon l'une quelconque des revendications précédentes, dans lequel la section tête (11) est au moins partiellement cylindrique et/ou la section d'assemblage (7) est au moins partiellement cylindrique.

3. Système de fixation selon l'une quelconque des revendications précédentes, dans lequel la section d'assemblage (7) est disposé de manière concentrique par rapport à la section tête (11).

4. Système de fixation selon l'une quelconque des revendications précédentes, dans lequel le boulon d'excentrique (1) comprend un filetage intérieur (23).

5. Système de fixation selon l'une quelconque des revendications précédentes, dans lequel le manchon d'excentrique (3) est chanfreiné intérieurement et/ou extérieurement au moins à l'une des deux extrémités axiales.

6. Système de fixation selon l'une quelconque des revendications précédentes comportant une butée (45, 145) pourvue d'une ouverture de réception (55) destinée à la réception de la section pivot (5).

7. Système de fixation selon la revendication 6, dans lequel l'ouverture de réception (55) et la section pivot (5) comportent un ajustement de transition.

8. Système de fixation selon l'une quelconque des revendications précédentes, dans lequel le boulon d'excentrique (1) et/ou la butée (45, 145) comprennent une ouverture d'aération.

9. Système de fixation selon l'une quelconque des revendications précédentes, dans lequel la butée (45, 145) comprend des ouvertures filetées destinées à la réception des éléments de serrage destinés au montage de l'élément de machine (41, 43, 61).

10. Boulon d'excentrique (1) pour un système de fixation selon l'une quelconque des revendications précédentes, lequel comprend une section pivot (5) au moins partiellement cylindrique destinée à la réception d'une butée (45, 145) dans une ouverture de réception (55) et une section d'assemblage (7) au moins partiellement cylindrique,
**caractérisé par** une section tête (11) au moins partiellement cylindrique, dans lequel la section d'assemblage (7) et la section tête (11) sont concentriques et excentrées par rapport à la section pivot (5) de telle sorte que, entre le section pivot (5) et le section d'assemblage (7),un étage s'étendant de manière excentrée est formé, dans lequel la section tête (11) comporte un moyen de transmission de couple (21), et dans lequel le diamètre de la section tête (11) est égal ou inférieur au diamètre de la section d'assemblage (7).

11. Procédé de fixation d'un élément de machine (41, 43, 61), en particulier pour un élément de machine (41, 43) allongé, en particulier une crémaillère ou un guidage linéaire, dans une butée (45, 145), au moyen d'un système de fixation selon l'une quelconque des revendications 1 à 9, comprenant les étapes suivantes :
la fixation de l'élément de machine (41, 43, 61) sur la butée (45, 145),
l'introduction du boulon d'excentrique (1) dans l'ouverture de réception (55) de la butée (45, 145),
l'alignement du boulon d'excentrique (1) par rotation dans l'ouverture de réception (55) pour permettre au manchon d'excentrique (3) d'être poussé sur le boulon d'excentrique (1),
l'alignement du manchon d'excentrique (3), et
le glissement du manchon d'excentrique (3) sur la section d'assemblage (7).
